(19) **Europäisches Patentamt / European Patent Office / Office européen des brevets**

(11) **EP 2 203 971 B1**

(12) **FASCICULE DE BREVET EUROPEEN**

(45) Date de publication et mention de la délivrance du brevet:
**18.04.2012 Bulletin 2012/16**

(51) Int Cl.:
*H02M 1/38* (2007.01)  *H02M 3/158* (2006.01)
*H02M 1/088* (2006.01)

(21) Numéro de dépôt: **08840899.2**

(22) Date de dépôt: **13.10.2008**

(86) Numéro de dépôt international:
**PCT/FR2008/051853**

(87) Numéro de publication internationale:
**WO 2009/053639 (30.04.2009 Gazette 2009/18)**

(54) **PROCEDE DE COMMANDE D'UNE ALIMENTATION A DECOUPAGE ET ALIMENTATION CORRESPONDANTE**

VERFAHREN ZUR STEUERUNG EINES SCHALTNETZTEILS UND ENTSPRECHENDES NETZTEIL

METHOD OF CONTROLLING OF A SWITCHED-MODE POWER SUPPLY AND CORRESPONDING POWER SUPPLY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **22.10.2007 FR 0758461**

(43) Date de publication de la demande:
**07.07.2010 Bulletin 2010/27**

(73) Titulaire: **Renault S.A.S.**
**92100 Boulogne-Billancourt (FR)**

(72) Inventeurs:
• **GATI, Mehdi**
**F-92330 Sceaux (FR)**
• **KETFI-CHERIF, Ahmed**
**F-78990 Elancourt (FR)**
• **MENSLER, Michel**
**F-78180 Montigny-Le-Bretonneux (FR)**
• **POGNANT-GROS, Philippe**
**92500 Rueil-Malmaison (FR)**

(56) Documents cités:
EP-A- 1 333 563         US-A1- 2006 152 204
US-A1- 2006 208 798

• YOUSEFZADEH V ET AL: "Sensorless optimization of dead times in DC-DC converters with synchronous rectifiers" APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, vol. 2, 6 mars 2005 (2005-03-06), pages 911-917Vol.2, XP010809344 ISBN: 978-0-7803-8975-5

**Description**

La présente invention concerne les alimentations à découpage, et plus particulièrement celles à commutation.

Les alimentations à découpage sont des éléments électriques permettant d'obtenir, à partir d'une tension continue ou d'un courant continu, une tension continue ou un courant continu de valeur différente. Ainsi, dans le cas de véhicules automobiles hybrides ou électriques, les différents équipements électriques ou le moteur électrique peuvent être alimentés par un élément de stockage d'énergie (par exemple une batterie) et présentent un rendement énergétique d'autant plus élevé que la tension d'alimentation est grande. Or, la tension délivrée par l'élément de stockage peut varier en fonction de l'état de charge de celui-ci.

Afin de garder une tension d'alimentation toujours élevée quelque soit l'état de charge de l'élément de stockage, une alimentation à découpage est généralement placée entre l'élément de stockage et les équipements électriques ou le moteur électrique. L'alimentation à découpage a pour but de modifier et de contrôler la tension d'alimentation des équipements ou du moteur, afin de maintenir leur rendement énergétique à une valeur élevée. Cependant, l'utilisation d'une alimentation à découpage créé des pertes supplémentaires dans le circuit électrique.

Plus spécifiquement, on considère le cas des alimentations à découpage à commutation comprenant deux interrupteurs montés en série. Les interrupteurs sont généralement des transistors bipolaires ou à effet de champ. Ils sont commandés par des signaux d'ouverture et de fermeture envoyés périodiquement et avec un décalage entre les deux interrupteurs de manière à ce que les deux interrupteurs ne soient pas en même temps dans le même état de commutation (fermé ou ouvert).

En alternant périodiquement les deux configurations et en faisant varier la durée d'une configuration pendant une période, il est possible d'obtenir une valeur de tension et/ou de courant voulue à la sortie de l'alimentation à découpage. Cependant, le temps de réponse des interrupteurs au signal de commande n'est pas nul, et cela entraîne un risque d'avoir les deux interrupteurs dans le même état de commutation en même temps. Ainsi, si les deux interrupteurs sont fermés en même temps, il y a risque de court-circuiter l'élément de stockage ou l'équipement électrique.

Pour éviter la configuration dans laquelle les deux interrupteurs de l'alimentation à découpage sont fermés en même temps, on prévoit, à chaque changement de configuration de l'alimentation à découpage, une durée durant laquelle les deux interrupteurs sont ouverts. Cependant, ces durées, dites de temps mort, provoquent une réponse non-linéaire de l'alimentation à découpage, et cette non-linéarité augmente avec le rapport de la durée de temps mort sur la durée d'une période.

Une solution pour limiter la non-linéarité du système est d'adapter la durée des temps morts, notamment en la minimisant. La demande de brevet US 2004/0130307 décrit ainsi une alimentation à découpage à commutation dans laquelle la fermeture d'un transistor est commandée par l'ouverture de l'autre. La demande de brevet WO 2004/114509 concerne une alimentation à découpage dans laquelle la durée des temps morts est déterminée en fonction de la tension aux bornes d'un des transistors. Enfin, la demande de brevet US 2006/0152204 utilise un système de commande permettant, à partir de l'écart entre la tension de sortie et la tension de référence, de déterminer la durée de temps mort à appliquer et de contrôler la conversion. Cependant, la diminution des temps morts reste limitée par la technologie des interrupteurs utilisés.

Une autre solution consiste à diminuer la fréquence de commande des interrupteurs. Cependant, cette solution entraîne une augmentation des pertes dans l'alimentation à découpage et donc une diminution du rendement.

Le but de l'invention est de commander une alimentation à découpage de manière à limiter les pertes dans celle-ci.

Le but de l'invention est également de commander une alimentation à découpage à une fréquence de commutation élevée tout en limitant l'effet des temps morts sur sa réponse.

Selon un aspect de l'invention, il est proposé un procédé de commande d'une alimentation à découpage comprenant une cellule de commutation comportant deux interrupteurs configurables montés en série, et dans lequel on configure cycliquement la cellule de commutation :

- dans un état de conduction, pendant une durée $T1$, dans lequel un premier interrupteur est fermé et le deuxième interrupteur est ouvert, et
- dans un état de blocage, pendant une durée $T2$, dans lequel le deuxième interrupteur est fermé et le premier interrupteur est ouvert. Selon le procédé, on configure en outre la cellule de commutation dans un état de transition, dans lequel le premier interrupteur et le deuxième interrupteur sont ouverts :
- pendant une durée $Tm1$ entre l'état de blocage et l'état de conduction, et
- pendant une durée $Tm2$ entre l'état de conduction et l'état de blocage,

et on détermine, en fonction du rapport cyclique voulu, les durées $T1$ et/ou $T2$ des états de conduction et de blocage respectivement, à partir d'un modèle non-linéaire dépendant des tensions d'entrée $V1$ et de sortie $V2$ de l'alimentation à découpage, et des durées $Tm1$ et/ou $Tm2$ des états de transition.

Ainsi, le procédé permet de prendre en compte la durée des temps morts dans la commande de l'alimentation à découpage, de manière à corriger l'effet des temps morts sur la réponse de l'alimentation à découpage. Plus particulièrement, le procédé n'a pas pour but de réduire au maximum la durée des temps morts, mais de compenser ses effets en contrôlant en conséquence la durée respective de l'état de blocage et de l'état de conduction de l'alimentation à découpage. Grâce à la compensation des temps morts, il devient à nouveau possible d'augmenter la fréquence de commutation de l'alimentation à découpage, et donc ses performances, malgré les limitations technologiques liées aux interrupteurs.

Contrairement aux boucles d'asservissement, qui modifient uniquement de manière linéaire le fonctionnement d'une alimentation à découpage en fonction de l'écart entre la sortie et la consigne, le procédé permet également de compenser les effets non-linéaires introduits par les temps morts.

Les paramètres du modèle non-linéaire permettant de calculer les durées T1 et/ou T2 des états de conduction et de blocage, sont déterminés en fonction de différentes grandeurs du système, notamment les tensions d'entrée et de sortie de l'alimentation à découpage et les durées des états de transition.

Préférentiellement, le rapport cyclique voulu est déterminé de manière linéaire en fonction de l'écart entre la tension de sortie V2 de l'alimentation à découpage et une tension de consigne Vc.

Le procédé peut comprendre une étape d'asservissement linéaire permettant d'adapter le rapport cyclique voulu de l'alimentation à découpage en fonction du signal de sortie et du signal de commande. En particulier, cet asservissement ne permet pas, seul, de compenser les effets des temps morts, mais il permet de prendre en compte, dans un premier temps, un écart éventuel entre la tension de sortie et la tension de consigne.

Selon un autre aspect de l'invention, il est proposé une l'alimentation à découpage comprenant :

- une cellule de commutation comportant deux interrupteurs montés en série et configurables en réponse à un signal de commande, et
- des moyens de commande aptes à délivrer le signal de commande de façon à configurer cycliquement la cellule de commutation :
- dans un état de conduction dans lequel un premier interrupteur est fermé et le deuxième interrupteur est ouvert, et
- dans un état de blocage dans lequel le deuxième interrupteur est fermé et le premier interrupteur est ouvert.

Selon l'invention, les moyens de commande sont aptes à délivrer le signal de commande de façon à configurer également la cellule de commutation dans un état de transition, dans lequel le premier interrupteur et le deuxième interrupteur sont ouverts :

- pendant une durée Tm1 entre l'état de blocage et l'état de conduction, et
- pendant une durée Tm2 entre l'état de conduction et l'état de blocage,

et en ce que les moyens de commande comprennent un moyen non-linéaire recevant un rapport cyclique voulu, délivrant les durées T1 et/ou T2 et comprenant

un modèle non-linéaire dépendant des tensions d'entrée V1 et de sortie V2 de l'alimentation à découpage, et des durées Tm1 et/ou Tm2.

Préférentiellement, les moyens de commande comprennent un moyen linéaire recevant l'écart entre la tension de sortie V2 de l'alimentation à découpage et une tension de consigne Vc, et délivrant le rapport cyclique voulu.

Préférentiellement, une diode est montée en parallèle de chaque interrupteur.

Selon un autre aspect, il est proposé un véhicule automobile comprenant une alimentation à découpage selon l'invention.

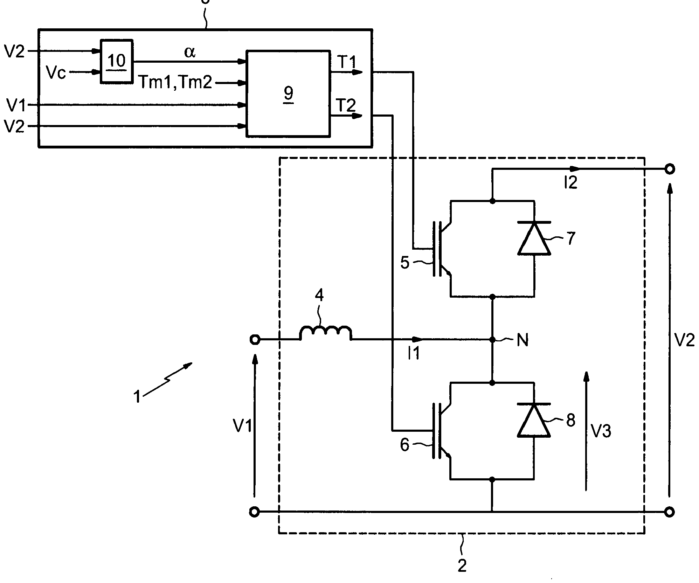

D'autres buts, caractéristiques et avantages de l'invention apparaîtront à la lecture de la description détaillée suivante d'un mode de réalisation pris à titre d'exemple nullement limitatif et illustré par le dessin annexé.

La figure annexée représente une alimentation à découpage 1 comprenant une cellule de commutation 2 et des moyens de commande 3.

La cellule de commutation 2 comprend deux bornes d'entrée par lesquelles elle reçoit une tension d'entrée V1 provenant, par exemple d'un moyen de stockage tel qu'une batterie. Elle comprend également deux bornes de sortie par lesquelles elle délivre une tension de sortie V2 par exemple à des équipements électriques ou à un moteur électrique d'un véhicule automobile.

Dans l'exemple illustré sur la figure annexée, la première borne d'entrée est reliée à la première borne de sortie, tandis que la deuxième borne d'entrée est reliée à une première borne d'un élément inductif 4, par exemple une bobine. L'élément inductif 4 permet notamment de limiter le courant lors des commutations des interrupteurs.

La cellule de commutation 2 comprend également un premier interrupteur 5 et un deuxième interrupteur 6. Les interrupteurs 5 et 6 sont par exemple des transistors bipolaires IGBT (en anglais : « insulated gate bipolar transistor ») ou à effet de champ. On considère dans la suite de la description que les deux interrupteurs 5 et 6 sont des transistors IGBT.

Les deux interrupteurs 5, 6 et l'élément inductif 4 sont reliés ensemble, à un noeud électrique N. Plus particulièrement, le noeud électrique N relie la deuxième borne de l'élément inductif 4, l'émetteur du premier interrupteur 5 et le collecteur du deuxième interrupteur 6. Le collecteur du premier interrupteur 5 est relié à la deuxième borne de sortie de la cellule de commutation 2, tandis que l'émetteur du deuxième transistor 6 est relié à la première borne d'entrée et à la première borne de sortie de la cellule de commutation 2. Les bases des deux interrupteurs 5 et 6 sont reliées aux moyens de commande 3 qui peuvent configurer alors la cellule de commutation 2 dans différents états.

En parallèle du premier interrupteur 5 et du deuxième interrupteur 6 sont montées respectivement une première diode 7 et une deuxième diode 8, les cathodes de la première diode 7 et de la deuxième diode 8 étant reliées respectivement au collecteur du premier interrupteur 5 et du deuxième interrupteur 6.

On appellera, dans la suite de la description, tension intermédiaire V3 la tension entre le noeud électrique N et la première borne d'entrée ou la première borne de sortie de la cellule de commutation. La tension V3 représente donc la tension existant entre le collecteur et l'émetteur du deuxième interrupteur 6 ou bien la tension existant entre la cathode et l'anode de la deuxième diode 8.

En théorie, les moyens de commande 3 envoient des signaux de commande complémentaires de manière à configurer successivement la cellule de commutation 2 dans deux états : un premier état dit de conduction dans lequel le premier interrupteur 5 est fermé et le deuxième interrupteur 6 est ouvert, et un deuxième état dit de blocage dans lequel le premier interrupteur 5 est ouvert et le deuxième interrupteur 6 est fermé.

Dans l'état de conduction, le courant I1 circulant dans l'élément inductif 4 est égal au courant I2 circulant dans la deuxième borne de sortie, et la tension intermédiaire V3 est égale à la tension de sortie V2. Dans l'état de blocage, le courant I2 circulant dans la deuxième borne de sortie est nul et la tension intermédiaire V3 est nulle aussi.

Les moyens de commande 3 permettent d'alterner successivement et périodiquement les deux états de configuration de la cellule de commutation 2. Ainsi, lorsque la période des signaux de commande est égale à T et que les signaux de commande configurent la cellule de commutation 2 dans l'état de conduction pendant une durée $\alpha T$ (où $\alpha$ est le rapport cyclique et est compris entre 0 et 1) et dans l'état de blocage pendant une durée $T-\alpha T$, alors on obtient une conversion de la tension et du courant selon les relations (1) et (2) :

$$< V2 > = \frac{1}{\alpha} < V3 > \qquad (1)$$

$$< I2 > = \alpha < I1 > \qquad (2),$$

où la notation <x> désigne la valeur moyenne temporelle de la grandeur x.

En pratique, le temps de réponse des interrupteurs 5, 6 n'est pas nul et il existe un risque, à chaque changement de configuration de la cellule de commutation 2, que les deux interrupteurs se retrouvent dans le même état (fermé ou ouvert) ce qui peut créer des problèmes, notamment de court-circuit de la tension de sortie V2 lorsque les deux interrupteurs 5, 6 sont fermés.

Les moyens de commande 3 introduisent donc un état de transition lors du passage de l'état de conduction à l'état de blocage et lors du passage de l'état de blocage à l'état de conduction. Dans cet état de transition, les deux interrupteurs 5, 6 sont ouverts pendant une durée dite de temps mort. On appellera dans la suite de la description, Tm1 la durée de l'état de transition lors du passage de l'état de blocage à l'état de conduction, et Tm2 la durée de l'état de transition lors du passage de l'état de conduction à l'état de blocage.

On considèrera dans la suite de la description, à des fins de simplification, que : Tm1=Tm2=Tm.

Pendant les états de transition, les diodes 7, 8, dites « de roue libre », permettent au courant I1 de circuler, selon son signe, vers la première ou la deuxième borne de sortie de la cellule de commutation 2. Cependant, lorsque le courant I1 s'annule pendant la durée d'un état de transition, il le reste jusqu'à la fin de l'état de transition, ce qui modifie la réponse de la cellule de commutation 2 en la rendant notamment non-linéaire.

Afin de garder la réponse de la cellule de commutation 2 aussi linéaire que possible, les moyens de commande 3 adaptent les signaux de commande des interrupteurs 5, 6 afin de compenser l'effet des états de transition sur la réponse de la cellule de commutation 2. Ainsi, en plus de la réduction des durées des états de transition, on compense également leurs effets, notamment par la modification du rapport cyclique voulu $\alpha$, de manière à pouvoir garder la fréquence de commutation (1/T) de la cellule de commutation 2 élevée.

Les effets non-linéaires des états de transition sur la réponse de la cellule de commutation 2 peuvent s'écrire sous la forme (3) :

$$< V3 > = F(\alpha, < V2 >, < V1 >, Tm) \qquad (3).$$

Pour compenser ces effets, on peut modifier le rapport cyclique voulu α en rapport cyclique corrigé α' de manière à retrouver une relation linéaire entre la tension <V3> et la tension <V2>, de la forme (1') suivante :

$$< V2 > = \frac{1}{\alpha'} < V3 > \qquad (1').$$

En contrôlant la cellule de commutation 2 avec le rapport cyclique corrigé α' ainsi déterminé, on peut alors compenser au moins en partie la non-linéarité de la réponse de la cellule de commutation 2 et donc garder une fréquence de commutation élevée.

En particulier, les moyens de commande 3 peuvent utiliser le système d'équations non-linéaire (4) suivant pour calculer α', et en déduire ensuite les durées T1=α'T-Tm1 et T2=T-α'T-Tm2 :

$$
\begin{cases}
\alpha' = (\alpha - \alpha_m) & si\ \alpha \le \alpha_1 + \alpha_m \\[2ex]
\alpha' = \dfrac{(\alpha_1 - \alpha_2).\alpha + \alpha_2.\alpha_m}{\alpha_1 - \alpha_2 + \alpha_m} & si\ \alpha_1 + \alpha_m \le \alpha \le \alpha_2 \\[2ex]
\alpha' = \alpha & si\ \alpha_2 \le \alpha \le \alpha_3 \\[2ex]
\alpha' = \dfrac{(\alpha_3 - \alpha_4).\alpha - \alpha_3.\alpha_m}{\alpha_3 - \alpha_4 + \alpha_m} & si\ \alpha_3 \le \alpha \le \alpha_4 - \alpha_m \\[2ex]
\alpha' = (\alpha + \alpha_m) & si\ \alpha \ge \alpha_4 - \alpha_m
\end{cases}
\qquad (4)
$$

dans lequel $\alpha_m$=Tm/T, et les paramètres $\alpha_1$, $\alpha_2$, $\alpha_3$, $\alpha_4$ sont déterminés en fonction de V1 et V2. En particulier, les paramètres $\alpha_1$, $\alpha_2$, $\alpha_3$, $\alpha_4$ peuvent être déterminés à partir de valeurs mémorisées, ou bien par calcul théorique ou bien encore par identification expérimentale.

On constate, à partir du système d'équations (4) que le rapport cyclique corrigé α' ne varie pas de manière proportionnelle en fonction du rapport cyclique voulu α. En particulier, la variation du rapport cyclique corrigé α' en fonction du rapport cyclique voulu α n'est pas constante mais dépend de la valeur du rapport cyclique α. On observe donc bien une correction non-linéaire du rapport cyclique voulu α.

Le moyen non-linéaire 9 peut alors calculer les durées T1 et T2 et commander les interrupteurs 5, 6 en conséquence. On obtient ainsi un comportement moins non-linéaire de la cellule de commutation 2 grâce à la prise en compte des temps morts. De plus, il est possible de travailler à une fréquence de commutation élevée avec une détérioration limitée du signal de sortie.

Les moyens de commande 3 peuvent également comprendre un système de bouclage linéaire permettant de corriger des dérives ou des écarts pouvant apparaître dans la cellule de commutation 2. Ainsi, les moyens de commande 3 peuvent comprendre un moyen linéaire 10 permettant de déterminer le rapport cyclique voulu en fonction de l'écart entre, par exemple la tension de sortie V2 et une tension de consigne Vc. Il s'agit d'un asservissement de l'alimentation à découpage 1 permettant d'obtenir en sortie, une tension V2 proche de la tension de consigne Vc. Le moyen linéaire 10 reçoit ainsi la tension de sortie V2 et la tension de consigne Vc, puis détermine de manière linéaire, en fonction de l'écart entre ces deux tensions, le rapport cyclique voulu α. Le rapport cyclique voulu α est déterminé de manière à obtenir une tension de sortie V2 égale à la tension de consigne Vc, mais il ne tient pas compte des durées de temps mort : il est donc délivré au moyen non-linéaire 9 pour obtenir le rapport cyclique corrigé α'.

L'alimentation à découpage 1 permet donc de limiter les effets de temps morts sur la réponse de la cellule de commutation, en modélisant notamment les composantes non-linéaires de la réponse et en modifiant la commande des interrupteurs de manière à compenser ces composantes non-linéaires.

L'invention n'est pas limitée uniquement au mode de réalisation décrit précédemment. En particulier, l'invention s'applique également à une cellule de commutation comprenant plusieurs circuits montés en parallèle entre les bornes d'entrée et les bornes de sortie, et comprenant chacun deux interrupteurs, deux diodes et un élément inductif tels que décrits précédemment.

De même, l'alimentation à découpage selon l'invention peut également être utilisée pour alimenter des convertisseurs DC-AC montés en aval, alimentant eux-mêmes des équipements électriques. Elle peut comprendre également une capacité de filtrage reliée entre les bornes de sortie de la cellule de commutation.

Enfin, l'invention est préférentiellement utilisée en tant qu'alimentation à découpage de type élévateur de tension, et appliquée notamment au domaine des véhicules automobiles. Ainsi, en plaçant une alimentation à découpage selon l'invention entre le ou les moyens de stockage et les équipements électriques, il devient possible d'en augmenter le rendement énergétique par augmentation notamment de la tension de sortie. Toutefois, l'invention peut s'appliquer également aux alimentations à découpage de type abaisseur de tension, ou encore aux alimentations à découpage de type élévateurs ou abaisseur de courant.

**Revendications**

1. Procédé de commande d'une alimentation à découpage (1) comprenant une cellule de commutation (2) comportant deux interrupteurs (5, 6) configurables montés en série, dans lequel on configure cycliquement la cellule de commutation (2) :

   - dans un état de conduction, pendant une durée T1, dans lequel un premier interrupteur (5) est fermé et le deuxième interrupteur (6) est ouvert, et
   - dans un état de blocage, pendant une durée T2, dans lequel le deuxième interrupteur (6) est fermé et le premier interrupteur (5) est ouvert,
   - dans un état de transition, dans lequel le premier interrupteur (5) et le deuxième interrupteur (6) sont ouverts :
   - pendant une durée Tm1 entre l'état de blocage et l'état de conduction, et
   - pendant une durée Tm2 entre l'état de conduction et l'état de blocage,

   **caractérisé en ce qu'**on détermine en fonction d'un rapport cyclique voulu ($\alpha$), les durées T1 et/ou T2, à partir d'un modèle non-linéaire dépendant des tensions d'entrée V 1 et de sortie V2 de l'alimentation à découpage, et des durées Tm1 et/ou Tm2.

2. Procédé de commande selon la revendication précédente, dans lequel le rapport cyclique voulu ($\alpha$) est déterminé de manière linéaire en fonction de l'écart entre la tension de sortie V2 de l'alimentation à découpage et une tension de consigne Vc.

3. Alimentation à découpage (1) comprenant :

   - une cellule de commutation comportant deux interrupteurs (5, 6) montés en série et configurables en réponse à un signal de commande, et
   - des moyens de commande (3) aptes à délivrer le signal de commande de façon à configurer cycliquement la cellule de commutation (2):
   - dans un état de conduction, pendant une durée T1, dans lequel un premier interrupteur (5) est fermé et le deuxième interrupteur (6) est ouvert, et
   - dans un état de blocage, pendant une durée T2, dans lequel le deuxième interrupteur (6) est fermé et le premier interrupteur (5) est ouvert,
   - dans un état de transition, dans lequel le premier interrupteur (5) et le deuxième interrupteur (6) sont ouverts :
   - pendant une durée Tm1 entre l'état de blocage et l'état de conduction, et
   - pendant une durée Tm2 entre l'état de conduction et l'état de blocage,

   **caractérisée en ce que** les moyens de commande (3) comprennent un moyen H non-linéaire (9) recevant un rapport cyclique voulu ($\alpha$), délivrant les durées T1 et/ou T2 et comprenant un modèle non-linéaire dépendant des tensions d'entrée V1 et de sortie V2 de l'alimentation à découpage, et des durées Tm1 et/ou Tm2.

4. Alimentation à découpage (1) selon la revendication précédente, dans laquelle les moyens de commande (3) comprennent un moyen linéaire (10) recevant l'écart entre la tension de sortie V2 de l'alimentation à découpage et une tension de consigne Vc, et délivrant le rapport cyclique voulu ($\alpha$).

**5.** Alimentation à découpage (1) selon la revendication 3 ou 4, dans laquelle une diode (7, 8) est montée en parallèle de chaque interrupteur (5, 6).

**6.** Véhicule automobile comprenant une alimentation à découpage (1) selon l'une quelconque des revendications 3 à 5.

**Claims**

**1.** Method of controlling a switched-mode power supply (1) comprising a switching cell (2) having two series-mounted configurable switches (5, 6), wherein the switching cell (2) is configured cyclically:

- in a conducting state, for a duration T1, in which a first switch (5) is closed and the second switch (6) is open, and
- in a blocking state, for a duration T2, in which the second switch (6) is closed and the first switch (5) is open,
- in a transitional state, in which the first switch (5) and the second switch (6) are open:
- for a duration Tm1 between the blocking state and the conducting state, and
- for a duration Tm2 between the conducting state and the blocking state,

**characterized in that** the durations T1 and/or T2 are determined, as a function of a desired duty cycle ($\alpha$), from a non-linear model dependent on the input V1 and output V2 voltages of the switched-mode power supply, and on the durations Tm1 and/or Tm2.

**2.** Control method according to the preceding claim, wherein the desired duty cycle ($\alpha$) is determined in a linear fashion as a function of the difference between the output voltage V2 of the switched-mode power supply and a setpoint voltage Vc.

**3.** Switched-mode power supply (1) comprising:

- a switching cell having two switches (5, 6) that are series-mounted and can be configured in response to a control signal, and
- control means (3) able to deliver the control signal in such a way as to cyclically configure the switching cell (2):
- in a conducting state, for a duration T1, in which a first switch (5) is closed and the second switch (6) is open, and
- in a blocking state, for a duration T2, in which the second switch (6) is closed and the first switch (5) is open,
- in a transitional state, in which the first switch (5) and the second switch (6) are open:
- for a duration Tm1 between the blocking state and the conducting state, and
- for a duration Tm2 between the conducting state and the blocking state,

**characterized in that** the control means (3) comprise a non-linear means (9) receiving a desired duty cycle ($\alpha$), delivering the durations T1 and/or T2 and comprising a non-linear model dependent on the input V1 and output V2 voltages of the switched-mode power supply, and on the durations Tm1 and/or Tm2.

**4.** Switched-mode power supply (1) according to the preceding claim, wherein the control means (3) comprise a linear means (10) receiving the difference between the output voltage V2 of the switched-mode power supply and a setpoint voltage Vc, and delivering the desired duty cycle ($\alpha$).

**5.** Switched-mode power supply (1) according to Claim 3 or 4, wherein a diode (7, 8) is mounted in parallel with each switch (5, 6).

**6.** Motor vehicle comprising a switched-mode power supply (1) according to any one of Claims 3 to 5.

**Patentansprüche**

**1.** Verfahren zur Steuerung eines Schaltnetzteils (1), das eine Schaltzelle (2) enthält, die zwei in Reihe geschaltete, konfigurierbare Schalter (5, 6) aufweist, bei dem die Schaltzelle (2) zyklisch konfiguriert wird:

- in einen Leitzustand, während einer Dauer T1, in dem ein erster Schalter (5) geschlossen und der zweite Schalter (6) offen ist, und
- in einen Blockierzustand, während einer Dauer T2, in dem der zweite Schalter (6) geschlossen und der erste Schalter (5) offen ist,
- in einen Übergangszustand, in dem der erste Schalter (5) und der zweite Schalter (6) offen sind:

    - während einer Dauer Tm1 zwischen dem Blockierzustand und dem Leitzustand, und
    - während einer Dauer Tm2 zwischen dem Leitzustand und dem Blockierzustand,

**dadurch gekennzeichnet, dass** entsprechend einem gewünschten Zyklusverhältnis ($\alpha$) die Dauern T1 und/oder T2 ausgehend von einem von den Eingangs-V1 und Ausgangsspannungen V2 des Schaltnetzteils und von den Dauern Tm1 und/oder Tm2 abhängenden nicht-linearen Modell bestimmt werden.

2. Steuerverfahren nach dem vorhergehenden Anspruch, bei dem das gewünschte Zyklusverhältnis ($\alpha$) entsprechend der Abweichung zwischen der Ausgangsspannung V2 des Schaltnetzteils und einer Sollspannung Vc linear bestimmt wird.

3. Schaltnetzteil (1), das enthält:

- eine Schaltzelle mit zwei Schaltern (5, 6), die in Reihe geschaltet und als Reaktion auf ein Steuersignal konfigurierbar sind, und
- Steuereinrichtungen (3), die das Steuersignal liefern können, um die Schaltzelle (2) zyklisch zu konfigurieren:

    - in einen Leitzustand, während einer Dauer T1, in dem ein erster Schalter (5) geschlossen und der zweite Schalter (6) offen ist, und
    - in einen Blockierzustand, während einer Dauer T2, in dem der zweite Schalter (6) geschlossen und der erste Schalter (5) offen ist,
    - in einen Übergangszustand, in dem der erste Schalter (5) und der zweite Schalter (6) offen sind:

        - während einer Dauer Tm1 zwischen dem Blockierzustand und dem Leitzustand, und
        - während einer Dauer Tm2 zwischen dem Leitzustand und dem Blockierzustand,

**dadurch gekennzeichnet, dass** die Steuereinrichtungen (3) eine nicht-lineare Einrichtung (9) enthalten, die ein gewünschtes Zyklusverhältnis ($\alpha$) empfängt, die Dauern T1 und/oder T2 liefert und ein nicht-lineares Modell enthält, das von den Eingangs- V1 und Ausgangsspannungen V2 des Schaltnetzteils und den Dauern Tm1 und/oder Tm2 abhängt.

4. Schaltnetzteil (1) nach dem vorhergehenden Anspruch, bei dem die Steuereinrichtungen (3) eine lineare Einrichtung (10) enthalten, die die Abweichung zwischen der Ausgangsspannung V2 des Schaltnetzteils und einer Sollspannung Vc empfängt und das gewünschte Zyklusverhältnis ($\alpha$) liefert.

5. Schaltnetzteil (1) nach Anspruch 3 oder 4, bei dem eine Diode (7,8) mit jedem Schalter (5, 6) parallelgeschaltet ist.

6. Kraftfahrzeug, das ein Schaltnetzteil (1) nach einem der Ansprüche 3 bis 5 enthält.

V2

V3

I2

7

8

N

5

6

2

I1

4

T1

T2

9

α

Tm1, Tm2

10

Vc

V2

V1

V2

V1

1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040130307 A
- WO 2004114509 A
- US 20060152204 A